# EUROPÄISCHE PATENTSCHRIFT

(11) **EP 0 232 917 B1**
(45) Veröffentlichungstag und Bekanntmachung des Hinweises auf die Patenterteilung: **11.08.1993**
(21) Anmeldenummer: 87102076.4
(22) Anmeldetag: 13.02.1987
(51) Int. Cl.: H04N 5/645, F16B 1/00, F16B 21/07

(54) **Verfahren sowie Klemmverbindung und Halterung zur Montage von Bildschirmgeräten**
Method as well as clamp and support for the mounting of visual display devices
Procédé et accouplement et fixation pour le montage des affichages d'image

(30) Priorität: 14.02.1986 DE 3604626; 14.02.1986 DE 3604647
(43) Veröffentlichungstag der Anmeldung: 19.08.1987
(73) Patentinhaber: Siemens Nixdorf Informationssysteme Aktiengesellschaft, 33102 Paderborn (DE)
(72) Erfinder: Lemche, Josef, D-8000 München 83 (DE)
(74) Vertreter: Fuchs, Franz-Josef, Dr.-Ing.

(56) Entgegenhaltungen:
- EP-A- 0 058 098
- EP-A- 0 152 773
- DE-A- 3 318 472
- DE-B- 1 265 196
- GB-A- 1 025 076
- US-A- 3 708 145

## Beschreibung

Die Erfindung betrifft ein Verfahren zur Montage von Bildschirmgeräten sowie eine Klemmverbindung und eine Halterung gemäß den Oberbegriffen der Ansprüche 1, 4 und 8.

Gegenwärtig werden bei der Montage von Bildröhre und Blende an ein Trägerelement viele zeitaufwändige kleine Einzelschritte, die zum Teil aus reinen Handarbeiten bestehen, ausgeführt. Dabei verursacht unter anderem die Forderung nach ringsum bündigem Anliegen der Sichtfensterinnenkante der Blende an die sphärische Bildschirmoberfläche der Bildröhre große Schwierigkeiten.

Um zum Beispiel diese Forderung zu erfüllen, wird bei einem bekannten Montageverfahren so vorgegangen, daß zunächst Abstandsbolzen unter Verwendung einer Montagelehre in einen Trägerrahmen eingeschraubt werden und daß dann die Blende von vorne an die von den Abstandsbolzen gehaltene Bildröhre so angedrückt wird, bis die an den Seiten der Blende angebrachten Krallen am Trägerrahmen einrasten. Durch die Fertigungstoleranzen des Glaskörpers der Bildröhre kommt es jedoch vor, daß die Krallen entweder nicht einrasten oder die Blende locker sitzt. Es muß deshalb mittels der Abstandsbolzen nachjustiert werden. Dazu ist es notwendig, die Blende wieder abzunehmen, damit sämtliche, die Bildröhre und die Abstandsbolzen fixierenden Muttern gelöst werden können. Nachdem die Abstandsbolzen entsprechend justiert, alle Muttern wieder angezogen wurden, sowie die Blende neu aufgesetzt wurde, erfolgt eine erneute Kontrolle des Abstandes zwischen der Innenkante der Blende und der sphärischen Bildschirmoberfläche der Bildröhre. Es kann sein, daß dieser zeitaufwendige Justiervorgang mehrmals wiederholt werden muß.

Aus dem Dokument EP-A-0 058 098 ist ein Bildschirmgerät bekannt, das an der Blende befestigte Mittel zur automatischen Zentrierung der Bildröhre in das Fenster der Blende beim Aufsetzen der Blende auf die Bildschirmvorderseite aufweist. Dabei wird zum einen eine Einheit bestehend aus der Blende und der Bildröhre gebildet und dann diese Einheit mit dem restlichen Gehäuse des Geräts verbunden. Es sind also mehrere Arbeitsschritte notwendig, die die Montage aufwendig machen. Außerdem werden als Befestigungsmittel unhandliche Schrauben verwendet.

Als Schnellspannmittel ist aus der US-A-3 708 145 eine Klemmverbindung zur gegenseitigen Befestigung wenigstens zweier Teile für die Halterung einer Bildröhre bekannt. Diese weist einen mit einem ersten Teil verbundenen Bolzen auf, dessen freies Ende mit einer spiralförmig umlaufenden, V-förmigen Rille entsprechend einem Schraubengewinde versehen ist. Durch die spiralförmig umlaufende Rille weist das freie Ende des Bolzens ein sägezahnförmiges Profil auf. Auf das freie Ende des Bolzens ist ein ein Kernloch enthaltendes Klemmelement in axialer Richtung aufschiebbar. Das Klemmelement besteht gegenüber dem Bolzen aus einem weicheren Material und weist eine in Achsrichtung längere Ausdehnung auf, die einem Vielfachen des Bolzendurchmessers entspricht. Das Kernloch hat wenigstens in einem Teilbereich einen gegenüber dem Außendurchmesser des Bolzens verringerten Durchmesser und innerhalb des Teilbereichs mit dem verringerten Durchmesser ein sägezahnförmiges Profil, das dem sägezahnförmigen Profil des eingeschobenen Bolzens entspricht. Nach dem Aufschieben des Klemmelements auf das freie Ende des Bolzens befindet sich das Klemmelement durch Verzahnen der sägezahnförmigen Profile des Bolzens und des Klemmelements in einem ein Verschieben in Gegenrichtung hemmenden Eingriff mit dem Bolzen.

Nachteilig bei dieser Klemmverbindung ist, daß das durch die V-förmigen Rillen gebildete V-förmige Sägezahnprofil keine so große Haltekraft bietet, daß sehr starke Verbindungen damit möglich sind. Durch die schrägen Anlaufflächen des Profils kann es sehr leicht zu einem Aufweiten des Klemmelements kommen. Hinzu kommt, daß das Kernloch des Klemmelements im Bereich des sägezahnförmigen Profils nur durch zwei gegenüberliegende Platten gebildet ist, so daß ein Eingriff des sägezahnförmigen Profils des Klemmelements in das sägezahnförmige Profil des Bolzens in axialer Richtung nur auf zwei gegenüberliegenden Linien bzw. radial jeweils nur an zwei Punkten erfolgt.

Als Schnellspannmittel sind ferner z.B. aus dem Dokument EP-A-0 152 773 Klemmverbindungen bekannt, die einen Bolzen mit ringförmig umlaufenden Rillen aufweisen, die durch parallel zueinander liegende Scheiben mit konischen Außenflächen gebildet sind. Auf diesen Bolzen ist ein hülsenförmiges Befestigungselement aufschiebbar, das zwei zylindrische, konzentrisch miteinander verbundene Hülsen unterschiedlichen Durchmessers hat. Die Hülse mit dem kleineren Durchmesser weist eine nach innen zeigende Rippe auf, die bei der Montage in eine Rille des Bolzens greift und sich dort verhakt. Nachteil dieser Hülse ist, daß es durch den Eingriff in eine einzelne Rille des Bolzens für stärkere Befestigungen nicht geeignet ist, und daß es nur durch Zerstörung demontiert werden kann.

Aus dem Dokument GB-A-1 025 076 ist eine Bildschirmgeräteanordnung bekannt, bei der die Bildröhre zwischen einer Blende und einer Rückwand des Gehäuses eingeklemmt ist. Dabei wird die Klemmkraft durch teleskopische Federelemente am Bildröhrenende erzeugt. Damit die Bildröhre senkrecht zur Bildröhrenachse gehalten wird, sind radial am Gehäuserahmen einzelne Justierelemente angeordnet, die die Bildröhre zwischen sich ebenfalls einklemmen. Für die Verstellung der Justierelemente sind zwar Schnellspannelemente mit Bolzen eingesetzt, die rinförmig umlaufende Rillen aufweisen, die durch parallel aneinandergereihte Scheiben mit konischen Außenflächen gebildet sind. Die zugehörigen Rastelemente sind aber nasenförmige Teile, die nur in eine einzelne Rille des Bolzens an einem vorgegebenen Punkt eingreifen. Sie sind deshalb nur geeignet, die Justierelemente festzustellen. Ähnliche Schnellspannelemente sind auch für die Befestigung der Blende vorgesehen, die aber zusätzlich mit einem Schraubenteil ausgerüstet sind, und letztlich die Blende festschrauben. Insgesamt eignet sich eine derartige Halterung für eine Bildröhre nicht zur Schnellmontage.

Bekannt ist auch, daß bei der Montage zwar für einzelne Arbeitsgänge arbeitserleichternde Hilfsmittel, wie zum Beispiel Montagelehren, verwendet und für verschiedene Tätigkeiten bei der Montage Industrieroboter eingesetzt werden. Die komplette Montage von Bildschirmgeräten durch einen Industrieroboter unter Berücksichtigung der Forderung nach ringsum bündigen Anliegen der Sichtfensterinnenkante an die Bildschirmoberfläche ist aber wegen des ungünstigen mechanischen Aufbaus der Haltevorrichtung der Bildröhre nur mit großem Aufwand zu bewerkstelligen.

Der Erfindung liegt daher die Aufgabe zugrunde, ein Verfahren der im Oberbegriff des Anspruchs 1 angegebenen Art so zu verbessern, daß die komplette Montage von Bildschirmgeräten von einem Industrieroboter unter Beachtung der oben erwähnten Forderung, unabhängig von den Fertigungstoleranzen des Bildröhrenglaskörpers, und mit möglichst geringem Aufwand ausgeführt werden kann.

Diese Aufgabe wird erfindungsgemäß durch die kennzeichnenden Merkmale des Anspruchs 1 gelöst. Die Erfindung nutzt dabei die selbstjustierende Wirkung, die durch die Führung der Bildröhre durch die Zentrierflächen und durch die unterschiedlichen Wölbungen von Bildschirmoberfläche und Blendeninnenkante gegeben ist. Dadurch ergibt sich ein sehr einfacher Montageablauf, der ohne weiteres von Automaten oder Robotern ausgeführt werden kann.

Besonders vorteilhaft ist die Verwendung von rastenden Klemmverbindungen gemäß Anspruch 2, die während des Preßvorgangs zum Einrasten gebracht werden.

Eine besonders vorteilhafte Weiterbildung der Erfindung ergibt sich gemäß Anspruch 3 durch die Kombination der Sandwichbauweise mit selbstrastenden Klemmverbindungen, wobei die Blende unten und der Trägerrahmen oben liegt, so daß in dieser Lage auch die weitere Bestückung mit den übrigen Baueinheiten des Bildschirmgerätes erfolgen kann.

Die Erfindung betrifft ferner eine Klemmverbindung nach dem Oberbegriff des Anspruchs 4. Klemmverbindungen bieten bekanntlich besondere Vorteile bei der Montage, weil sie die gegenseitige Befestigung zweier Teile durch einfaches Aufschieben oder Aufdrücken eines Konterelementes auf ein entsprechendes Halteelement ermöglichen. Neben den früher schon genannten Dokumenten sind auch aus der DE-OS 27 08 106 und der DE-OS 26 48 090 Verbindungsmechanismen bekannt, bei denen für die Befestigung beweglicher oder festsitzender Teile auf eine Achse oder Welle ebene oder vorgewölbte Klemmelemente aufgeschoben werden, die aus Federblech bestehen und nach innen zeigende Spreizlappen aufweisen. Beim Aufschieben stellen sich die Spreizlappen schräg nach hinten aus und verkrallen sich beim Versuch, das Klemmelement wieder abzuziehen, in der Oberfläche der Achse oder Welle. Um die Abdruckwirkung zu erhöhen, wird die Oberfläche der Achse oder Welle mit einem sägezahnähnlichen bzw. sägezahnförmigen Profil versehen.

Die Vorteile einer solchen Schnellsicherung bzw. Schnellbefestigung gegenüber einer mit Schrauben und Muttern bewirkten Sicherung bzw. Befestigung liegen in der einfachen Handhabung und der damit verbundenen Zeit- und Kosteneinsparung. Ein Nachteil dieser Klemmelemente besteht jedoch darin, daß sie im Falle einer auf sie in axialer Richtung wirkenden Abziehkraft durch ihre unmassive Bauform nur eine relativ geringe Haltekraft aufbringen. Für die Befestigung schwerer Teile an einem Trägerelement sind sie deshalb nicht geeignet.

Eine für die Montage von Bildschirmgeräten besonders vorteilhafte Klemmverbindung, die ebenfalls einfach zu handhaben ist und schnell ausgeführt werden kann, darüberhinaus aber haltbarer und außerdem für die Befestigung schwerer Teile an einem Trägerelement gut geeignet ist, ergibt sich durch die kennzeichnenden Merkmale des Anspruchs 4. Der Vorteil einer derartigen Klemmverbindung besteht insbesondere darin, daß innerhalb des Kernlochs mehrere den Bolzen ringförmig umlaufende Sägezahnkanten in Eingriff mit der Innenfläche des Kernlochs gelangen, wodurch eine große Haltekraft gegen ein Abziehen des Klemmelementes vom Bolzen erzielt wird.

Vorteilhafte Ausgestaltungen der erfindungsgemäß ausgebildeten Klemmverbindung ergeben sich aus den Ansprüchen 5 bis 7. So ist beispielsweise das als Befestigungsbuchse ausgebildete Klemmelement der Klemmverbindung wenigstens in einem Teilbereich des Kernlochs mit einem verringerten Durchmesser und mit einem sägezahnförmigen Profil versehen, das analog zu dem auf dem Bolzen aufgebrachten Profil ausgebildet ist. Die Richtung der Sägezähne innerhalb des Kernlochs und auf dem Bolzen ist so, daß beim Aufschieben des Klemmelementes auf den Bolzen die Sägezähne aneinander abgleiten, so daß beim Abziehen des Klemmelements vom Bolzen die Sägezahne ineinander eingreifen. Dadurch wird gegenüber einem Klemmelement mit glattem Kernloch eine weitere wesentliche Steigerung der Haltekraft des Klemmelements auf dem Bolzen erzielt.

Beim Aufschieben des Klemmelementes auf den Bolzen kommt es infolge des gegenseitigen Abgleitens der Sägezähne zu einer Spreizwirkung innerhalb des Kernlochs. Diese Spreizwirkung wird durch Aufschneiden der Befestigungsbuchse in axialer Richtung kompensiert. Die beiden halbschaligen Hälften der Befestigungsbuchse sind durch ein dunnes, wie ein Scharnier wirkendes Band miteinander verbunden und werden durch eine in axialer Richtung aufgeschobene zylindrische Federklammer federnd zusammengehalten. Somit kann die Befestigungsbuchse der radial nach außen wirkenden Spreizkraft nachgeben und trotzdem ein vollständiges Ineinandergreifen der sägezahnförmigen Profile gewährleisten. Außerdem kann nach Abziehen der zylindrischen Federklammer das Klemmelement aufgeklappt und die Klemmverbindung ohne Beschädigung irgendwelcher Teile gelöst werden.

Da sich beim Zusammenklappen der beiden Suchsenhälften zwischen diesen durch das die beiden Hälften verbindende dünne Band ein keilförmiger Spalt ausbildet, ist der Querschnitt des Klemmelementes und insbesondere der des Kernlochs nicht mehr kreisförmig. Die Hauptbelastung sowohl beim Verzahnen als auch beim Vorbeigleiten der Sägezähne tritt an den beiden näher beieinanderliegenden Enden der halbkreisförmigen Sägezahnkanten auf. An diesen Enden kann es durch Kaltfluß des Materials zu einem Verschmieren der Rillen des sägezahnförmigen Profils kommen. Durch Abflachen der beiden Buchsenhälften an den Schnittflächen derart, daß zwischen diesen ein konstant breiter Spalt bei gleichzeitiger Bildung eines kreisförmigen Querschnitts des Kernlochs entsteht, legen sich die nun nur noch eine kreissegmentförmige Aussparung aufweisenden Buchsenhälften einander parallel gegenüber am Bolzen an, wodurch eine gleichmäßige Verteilung der Belastung über den Umfang der Sägezähne erreicht wird.

Wegen der gegenüber dem Mittelbereich wesentlich empfindlicheren Enden der kreissegmentförmigen Sägezähne besteht aber weiterhin die Gefahr eines Verschmierens der durch die Sägezähne gebildeten Rillen beim Aufschieben der Befestigungsbuchse auf den Bolzen. Ein optimales Ineinandergreifen der Sägezähne der Befestigungsbuchse und des Bolzens ist damit nicht sichergestellt. Durch Vergrößern des Kernlochradius, bezogen auf den Bolzenradius, ohne den Tiefgang der Ausnehmungen in den Buchsenhälften zu verändern, erhält das Kernloch einen elliptischen Querschnitt, dessen kleinerer Ellipsendurchmesser dem des Bolzens angepaßt ist. Dadurch wird der Druck auf die empfindlicheren Enden der kreissegmentförmigen Sägezähne verringert und auf den stabileren Mittelbereich konzentriert und deshalb ein Kaltfluß des Materials verhindert.

Ferner hat die Ausbildung des sägezahnförmigen Profils nur in einem Teilbereich des Kernlochs den Vorteil, daß durch Wahl des Teilbereichs eine definierte Haltekraft des Klemmelements gewonnen und dadurch nur ein bestimmter Druck beim Verpressen benötigt wird, um alle in dem Teilbereich vorhandenen Sägezähne mit Sägezähnen des Bolzens in Eingriff zu bringen.

Mit der Anbringung einer symmetrischen Nut an der Befestigungsbuchse kann diese Befestigungsbuchse in Schlitze eines der zu verbindenden Teile eingeführt und verankert werden, wodurch das Klemmelement zu einem integralen Bestandteil dieses Teils wird. Ein stirnförmig angeformter großflächiger Flansch bewirkt durch gleichzeitiges Anliegen an diesem Teil eine große Kippstabilität des Klemmelementes.

Die Erfindung betrifft ferner eine Halterung für eine Bildröhre gemäß dem Oberbegriff des Anspruchs 8 . Im Gegensatz zu bekannten Bildröhren-Halterungen, bei denen die Bildröhre an in einen Trägerrahmen eingeschraubte Abstandsbolzen durch Schrauben befestigt und über die Bildröhre an eine Blende geschoben wird, die mit Rastkrallen am Trägerrahmen einrastet, soll die Halterung so ausgebildet sein, daß bei der Montage keine Nachjustierung erforderlich und dennoch sichergestellt ist, daß die Blendenausschnittsinnenkante auf der sphärischen Bildschirmoberfläche der Bildröhre ringsum bündig anliegt.

Eine diesen Anforderungen genügende vorteilhafte Ausgestaltung der Halterung ergibt sich durch die kennzeichnenden Merkmale des Anspruchs 8. Diese Halterung hat den Vorteil, daß die Bilcröhre nicht mehr direkt mittels Schrauben am Trägerrahmen befestigt, sondern frei zwischen Trägerrahmen und Blende von diesem eingeklemmt gehalten wird. Die Positionierung der Bildröhre erfolgt dabei durch seitliche, zusammen einen Schacht bildende Zentrierflächen. Eingeklemmt wird die Bildröhre dadurch, daß die Blendenausschnittsinnenkante auf diese sphärische Oberfläche der Bildröhre, die mit ihren Haltelaschen am Trägerrahmen anliegt, drückt, ohne daß die Blende den Trägerrahmen berührt. Der dafür notwendige Anpreßdruck wird von den Klemmverbindungen erzeugt.

Vorteilhafte Weiterbildungen der Halterung gemäß der Erfindung ergeben sich aus den Ansprüchen 9 bis 12 Danach ist zum Beispiel der Radius der Wölbung der Blendenausschnittsinnenkante größer als der Radius der Wölbung der sphärischen Bildschirmoberfläche gewählt und die einzelnen Klemmverbindungen sind in den Eckbereichen des Blendenausschnitts bzw. des Trägerrahmens angeordnet. Durch diese Maßnahmen kann sich beim Verpresssen der Klemmverbindungen die Blendenausschnittsinnenkante jeweils von der Mitte einer jeden Seite aus bis in die Ecken infolge der Verformung bündig an die sphärische Bildschirmoberfläche der Bildröhre anlegen, wobei fertigungstechnisch bedingte unterschiedliche Wölbungen der sphärischen Bildschirmoberfläche leicht durch mehr oder weniger starke Verformungen der Blende ausgeglichen werden können. Die Blende ist damit als aktives Bestandteil an der Befestigung der Bildröhre beteiligt.

Im folgenden werden die einzelnen Verfahrensschritte bei der Montage von Bildschirmgeräten sowie Ausführungsbeispiele der dabei verwendeten Klemmverbindungen und der Halterungen gemäß der Erfindung anhand der Zeichnung näher beschrieben. Es zeigen
- FIG 1: eine Einpreßstation für die Montage von Bildschirmgeräten mit den übereinander eingelegten und zu verbindenden Teilen: Blende, Bildröhre und Chassis,
- FIG 2: die Einpreßstation nach FIG 1 im Preßzustand,
- FIG 3: die Einpreßstation nach FIG 1 nach Aufhebung des Preßzustandes,
- FIG 4A: einen Bolzen der Klemmverbindung,
- FIG 4B: ein Klemmelement der Klemmverbindung,
- FIG 4C: eine Vorderansicht des Klemmelements nach FIG 4B,
- FIG 5A: das Klemmelement nach den FIG 4B und 4C in aufgeklapptem Zustand,
- FIG 5B: eine Vorderansicht des aufgeklappten Klemmelements nach FIG 5A,
- FIG 6: eine schematische Darstellung von Bolzen und Klemmelement im Rillenbereich,
- FIG 7: eine Teilvergrößerung des Bolzens nach FIG 4A,
- FIG 8: eine Explosionsdarstellung einer Halterung für eine Bildröhre,
- FIG 9A: eine Seitenansicht der Halterung nach FIG 8 im montierten Zustand,
- FIG 9B: eine Teilvergrößerung der Halterung von FIG 9A im nichtmontierten Zustand,
- FIG 9C: eine Teilvergrößerung der Halterung nach FIG 9A im montierten Zustand,
- FIG 10: eine erste Ausführungsform für die Verankerung des Bolzens in der Blende,
- FIG 11: eine zweite Ausführungsform der Verankerung des Bolzens in der Blende und
- FIG 12A und 12B: eine weitere Ausführungsform für die Verankerung des Bolzens in der Blende.

Das der Erfindung zugrundeliegende Verfahren zur Montage von Bildschirmgeräten erfolgt in drei Schritten.

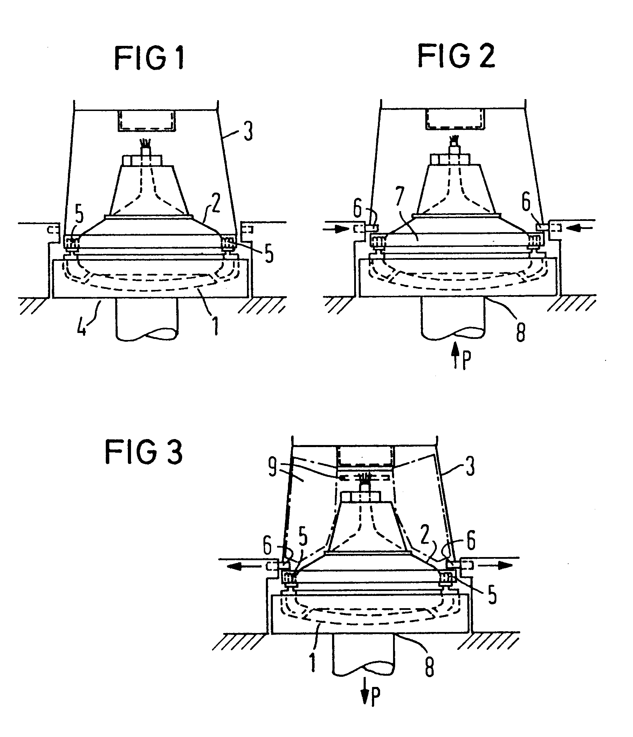

Beim ersten in FIG 1 dargestellten Schritt werden die zu verbindenden Teile: Blende 1, Bildröhre 2 und Trägerrahmen 3 in dieser Reihenfolge von einem Automaten nacheinander übereinander getürmt in eine Einpreßstation eingelegt. Die Blende 1 liegt dabei mit ihrer Frontseite nach unten in einer Formschale 4. Diese Formschale 4 ist so ausgebildet, daß die Blende nur mit ihren Randbereichen aufliegt. Die Bildröhre 2 wird, mit der Bildschirmoberfläche ebenfalls nach unten gerichtet, in den in der Blende 1 durch seitliche Zentrierflächen gebildeten Schacht gelegt. Der Trägerrahmen 3 schließlich liegt auf den Haltelaschen der Bildröhre 2 ohne direkten Kontakt mit der Blende 1 auf. Die an der Blende 1 und am Trägerrahmen 3 angebrachten und zueinander ausgerichteten Klemmverbindungselemente 5 greifen dabei ineinander ein, ohne zunächst einzurasten.

Beim nachfolgenden zweiten Schritt (FIG 2) werden in der Einpreßstation seitlich in der Umgebung der Klemmverbindungselemente 5 angeordnete, waagrecht liegende Anschlagbolzen 6 ausgefahren. Diese Anschlagbolzen 6 werden seitlich über Halteflächen 7 des Trägerrahmens 3, der an diesen Stellen Gegendruckpunkte aufweist, geschoben, so daß der Trägerrahmen 3 nach oben hin fixiert wird. Anschließend wird in senkrechter Richtung von unten nach oben ein Druck (siehe Kraftpfeil P) auf die Formschale 4 ausgeübt. Die Formschale 4 ist hierbei Teil eines Druckstempels 8. Sie drückt die Blende 1 gegen den von den Anschlagbolzen 6 festgehaltenen Trägerrahmen 3 und klemmt die zwischen Blende 1 und Trägerrahmen 3 befindliche Bildröhre 2 ein, wodurch die beiden Verbindungselemente der Klemmverbindung 5 einrasten. Beim Zusammenfügen der Teile wird die Blende 1 an die Bildschirmoberfläche der Bildröhre 2 angedrückt, so daß sie sich der Wölbung der Bildschirmoberfläche durch leichte Verformung anpaßt, wobei die Blendenausschnittsinnenkante sich ringsum bündig unabhängig von Toleranzschwankungen des Bildröhrenglaskörpers anlegt. Der Anpreßdruck beim Zusammenfügen kann zum Beispiel 5000 N betragen.

Beim letzten Verfahrensschritt (FIG 3) wird der Preßzustand wieder aufgehoben und die Formschale 4 entlastet. Außerdem werden die Anschlagbolzen 6 in die Ausgangsstellung zurückgefahren. Blende 1, Bildröhre 2 und Trägerrahmen 3 sind jetzt fest zu einer Einheit verbunden. In dieser Lage können schließlich dann auch noch die sonstigen elektrischen Baugruppen 9, wie zum Beispiel Monitor- Wandler- und Videobaugruppen eingesetzt sowie Kalotte und Standfuß aufgesetzt werden. Das Bildschirmgerät ist damit komplett montiert.

Das oben beschriebene, vorzugsweise angewendete Montageverfahren kann unter Berücksichtigung notwendiger konstruktiver Änderungen der Einpreßstation, durch entsprechende Ausgestaltung und Programmierung des Automaten sowie übriger notwendiger Maßnahmen abgewandelt werden. Beispielsweise kann die Reihenfolge des Einlegens der zu verbindenden Teile umgedreht und der Anpreßdruck von oben nach unten ausgeübt werden. Auch könnten zum Beispiel statt der Klemmverbindungselemente auch Schraubverbindungselemente verwendet werden, was aber wieder einen zusätzlichen technischen Aufwand wegen des maschinellen Verschraubens bedeutet. Es wäre auch denkbar, die Klemm- bzw. Schraubverbindungselemente in Kombination mit Scharnieren zu verwenden. Dadurch ergibt sich jedoch, falls es sich nicht um Einhakscharniere handelt, ein geänderter Verfahrensablauf in der Weise, daß Blende 1 und Trägerrahmen 3 unter Bildung eines Öffnungswinkels gleichzeitig in die Montageaufnahme gelegt werden und anschließend die Bildröhre 2 durch die Öffnung zwischen die Blende 1 und Trägerrahmen 3 gelegt und die Öffnung geschlossen wird. Das Verpressen der Teile erfolgt dann in bekannter Weise mit der Besonderheit, daß durch den konstruktiven Aufbau des Automaten der Verpreßdruck nur an den Stellen der Klemmverbindungselemente 5 wirksam ist.

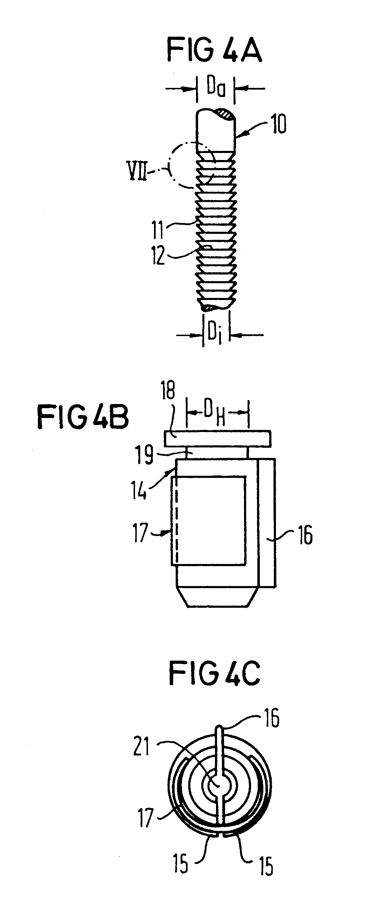

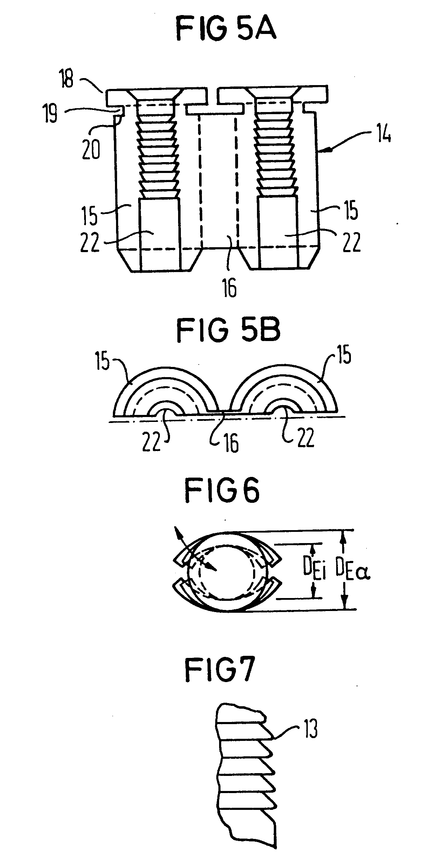

In FIG 4A ist der Endbereich des Bolzens der Klemmverbindung 5 (FIG 1) dargestellt. Dieser Bolzen 10 weist eine Reihe von Rillen 11 auf, die durch parallel zueinander verlaufende Scheiben 12 mit Konisch verlaufenden Außenflächen gebildet sind, so daß sich ein sägezahnförmiges Profil ergibt. Die äußeren Sägezahnkanten 13 (FIG 7) sind vorzugsweise leicht gerundet. Der Abstand zwischen den einzelnen Sagezähnen beträgt vorzugsweise 1,2 mm und die Schräge der Sägezahnflanken liegt vorzugsweise bei 45 Grad. Der nicht abgebildete Kopfteil des Bolzens 10 kann einen großflächigen kreisförmigen Stirnflansch oder zwei parallel zueinander liegende, den Bolzen 10 umlaufende Nuten aufweisen. Die ebenfalls nicht abgebildete Spitze des Bolzens 10 ist zum leichteren Einfädeln in eine Öffnung keilförmig geformt und mit abgerundeten Kanten versehen.

Das in den FIG 4B und 4C dargestellte Klemmelement der Klemmverbindung 5 (FIG 1) besteht aus einer länglichen und in axialer Richtung geteilten Befestigungsbuchse 14, deren Hälften 15 an einer Seite durch ein dünnes, wie ein Scharnier wirkendes Band 16 miteinander verbunden sind und aus einer in axialer Richtung aufgeschobenen zylindrischen Federklammer 17 mit Schlitz, die die beiden Buchsenhälften 15 federnd zusammenhält. Die beiden Buchsenhälften 15 und das sie verbindende Band 16 bilden zusammen ein einheitliches Bauteil aus demselben Werkstoff (FIG 5A, 5B). Der Werkstoff kann Kunststoff, zum Beispiel, Polyamid oder Aluminium sein. Im Vergleich dazu besteht der Bolzen 10 (FIG 4A) aus einem wesentlich härteren Material. Hergestellt werden kann das Klemmelement kostengünstig in einem Druckgußverfahren.

An einem stirnseitigen Ende der im zusammengeklappten Zustand zylindrischen Befestigungsbuchse 14 (FIG 4B) ist eine ringsum laufende Nut 19 mit unmittelbar daran anschließendem kreisförmigen Stirnflansch 18 vorgesehen. Die Nut 19 dient dazu, die Befestigungsbuchse 14 des Klemmelementes in Schlitze eines der zu verbindenden Teile einzuschieben und so festzuklemmen, daß sie auch beim Drehen oder Kippen dieses Teils nicht aus den Schlitzen herausrutschen kann. In axialer Richtung ist das Klemmelement unbeweglich und dadurch belastbar. Die Klemmwirkung wird durch Wahl der Nut- bzw. Schlitzbreite erzielt. Erfolgt die Klemmung durch die Schlitzbreite, ist eine Bewegung des Klemmelements nur auf einer Geraden in Schlitzrichtung möglich. Bei einer Klemmung durch die Nutbreite kann das Klemmelement, falls die Schlitzbreite etwas größer ausgebildet ist als der Halsdurchmesser D_{H} der Nut, auf einer zur Achsrichtung senkrecht stehenden Ebene nach allen Seiten hin bewegt werden.

Das ist insbesondere dann von Vorteil, wenn die Lage der eingreifenden Bolzen 10 nicht genau festliegt. Zu beachten dabei ist, daß es durch die Schlitzbreite nicht zu einem seitlichen Herausfallen der Befestigungsbuchsen 14 aus den Schlitzen kommt und die Andruckflächen der Stützschultern 20 (siehe FIG 5A) immer so groß sind, daß eine ausreichende Festigkeit der Verbindung sichergestellt ist.

Der großflächige Stirnflansch 18, der rückseitig plan an Gegenflächen anliegt, stabilisiert die Befestigungsbuchse 14 gegen Kippen, falls auf den eingeschobenen Bolzen 10 senkrecht zu seiner Achsrichtung eine Kraft wirkt, die auf das Klemmelement mit Lager- und Drehpunkt in der Nut ein Drehmoment ausübt.

Die Befestigungsbuchse 14 des Klemmelements kann in verschiedenen Ausführungsformen realisiert werden. In der Zeichnung ist die Befestigungsbuchse 14 zweigeteilt dargestellt. Es wäre aber für manche Anwendungsfälle zum Beispiel auch eine einteilige Ausbildung der Befestigungsbuchse 14 denkbar mit einem Kernloch 21 (FIG 4C), das wenigstens in einem Teilbereich einen gegenüber dem Bolzendurchmesser Dₐ geringfügig verringerten Durchmesser aufweist. Weitere Ausführungsformen sind die einfache Zweiteilung der Befestigungsbuchse 14 mit aufgeschobener Federklammer 17 und die Ausbildung eines sägezahnförmigen Profils wenigstens in einem Teilbereich innerhalb des Kernlochs 21.

In der Zeichnung ist die in ihrer Ausbildung aufwendigste Befestigungsbuchse 14 dargestellt. Die Buchsenhälften 15 sind dabei, wie aus FIG 4C und 5B zu entnehmen, an ihren Schnittflächen abgeplattet und zwar so weit, daß die im zusammengeklappten Zustand parallel gegenüberliegenden und zwischen sich einen Spalt aufweisenden Buchsenhälften 15 ein Kernloch 21 mit insgesamt kreisförmigem Querschnitt bilden. Der Spalt wird dabei durch einen endlichen Radius, mit dem sich das dünne Band 16 biegt, bewirkt. Das Kernloch 21 wird durch die in den Innenseiten der Buchsenhälften 15 eingebrachten Ausnehmungen 22 (FIG 5A, 5B) geformt. Innerhalb der schalenförmigen Ausnehmungen 22 sind sägezahnförmige Profile vorhanden, die dem sägezahnförmigen Profil auf dem Bolzen 10 angepaßt sind. In vielen Fällen genügt die Ausbildung des sägezahnförmigen Profils in einem Teilbereich. Die übrigen Bereiche sind dann mit einem erweiterten Durchmesser versehen, der mindestens so groß ist wie der Durchmesser Dₐ des Bolzens 10.

Die Radien der Ausnehmungen 22 und damit auch die Radien der die sägezahnförmigen Profile aufweisenden Teilbereiche können, ohne jedoch den Tiefgang der Ausnehmungen 22 zu verändern, bezogen auf den Radius des Bolzens 10 größer gewählt werden. (FIG 6). Durch Vergrößern der Radien der Ausnehmungen 22 erhält das Kernloch 21 insgesamt einen elliptischen Querschnitt, dessen kleinere Ellipsendurchmesser D_{Ei} und D_{Ea} den Bolzendurchmessern Dᵢ und Dₐ im Rillenbereich angepaßt sind.

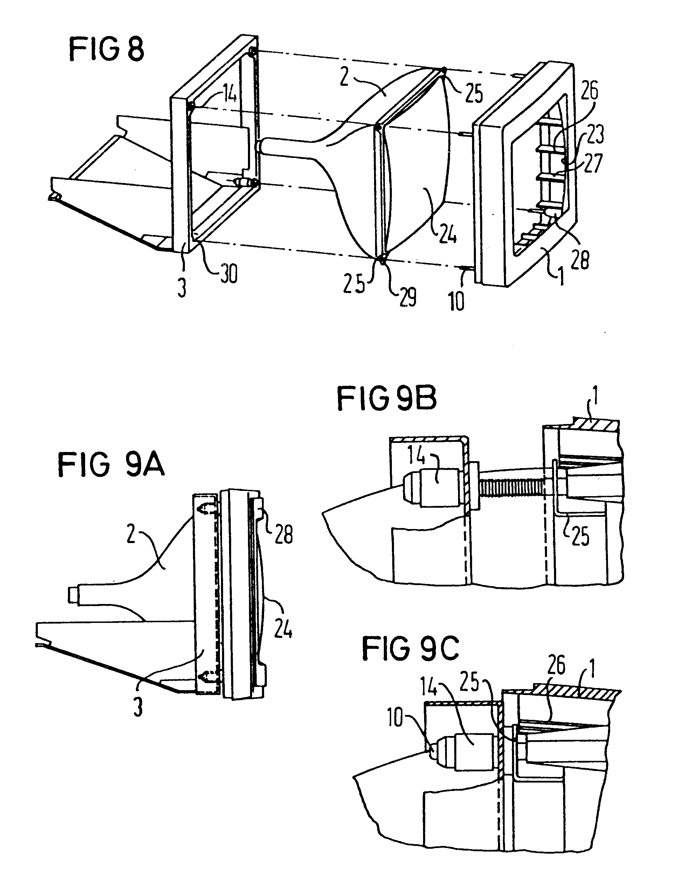

FIG 8 zeigt in einer Explosionsdarstellung eine gemäß der Erfindung ausgebildete Halterung für die Bildröhre 2. Die Bildröhre wird zwischen dem Trägerrahmen 3 und der Blende 1 eingeklemmt, indem die Blendenausschnittsinnenkante 23 auf die sphärische Bildschirmoberfläche 24 der Bildröhre 2 drückt, die ihrerseits mit Befestigungslaschen 25 am Stirnflansch 18 des Klemmelementes anliegend gegen den Trägerzahmen 3 drückt. Die Blende 1 berührt dabei den Trägerrahmen 3 nicht.

Die Bildröhre 2 wird durch an den seitlichen Innenrändern der Blende 1 angeordnete, Zentrierflächen 26 aufweisende Rippen 27 zentrisch geführt. Diese Rippen 27 stehen senkrecht zu den äußeren Begrenzungsflächen der Bildröhre 2 und bilden zusammen einen Führungsschacht für die Bildfröhre 2. Diese zentrische Führung könnte auch durch entsprechende, am Trägerrahmen 3 angeordnete Rippen erfolgen. Der Radius der Wölbung der Blendenausschnittsinnenkante 23 ist geringfügig größer als der Radius der Wölbung der Bildschirmoberfläche 24. Dadurch legen sich beim Zusammenfügen der drei Teile zuerst die Mitten Jeder Seite der Blendenabschnittsinnenkante 23 bündig an die Bildschirmoberfläche 24 an und nachfolgend durch leichte Verformung der Blende 1 die daneben liegenden Bereiche. Mit diesen Maßnahmen wid unabhängig von Schwankungen der Wölbung der Bildschirmoberfläche 24 durch Fertigungstoleranzen des Glaskörpers der Bildröhre 2 immer ein bündiges Anliegen der Blendenausschnittsinnenkante 23 an die Bildschirmoberfläche 24 erzielt. Die Verformung der Blende 1 ist so gering, daß sie mit dem bloßen Auge nicht wahrgenommen werden kann. Sie bewirkt aber neben der Federkraft der Befestigungslaschen 25 eine zusätzliche Erhöhung der Vorspannung für die Klemmverbindung, die jeweils in den Eckbereichen 28 der Blende 1 angeordnet ist. Diese Vorspannung bleibt durch den Sägezahnmechanismus der Klemmverbindung (FIG 4A) konstant. Insgesamt ist die Halterung der Bildröhre so fest, daß sie sehr hohen Anfoderungen gerecht wird.

Wegen der Anordnung der Klemmverbindungselemente in den Eckbereichen 28 der Blende 1 greifen die Bolzen 10 durch Öffnungen 29 der Befestigungslaschen 25 der Bildröhre 2, die bei Fabrikaten verschiedener Firmen unterschiedlich bemessen sein können. Andere Positionen für die Klemmverbindungselemente sind bei entsprechender Wölbung der Innenkante der Blende 1 möglich. Zum Beispiel könnten die Klemmverbindungselemente so angeordnet sein, daß sie in den Mittenbereichen der Blende 1 wirken. Es muß dann aber die Wölbung der Blendenausschnittsinnenkante 23 bezogen auf die Wölbung der Bildschirmoberfläche 24 kleiner sein.

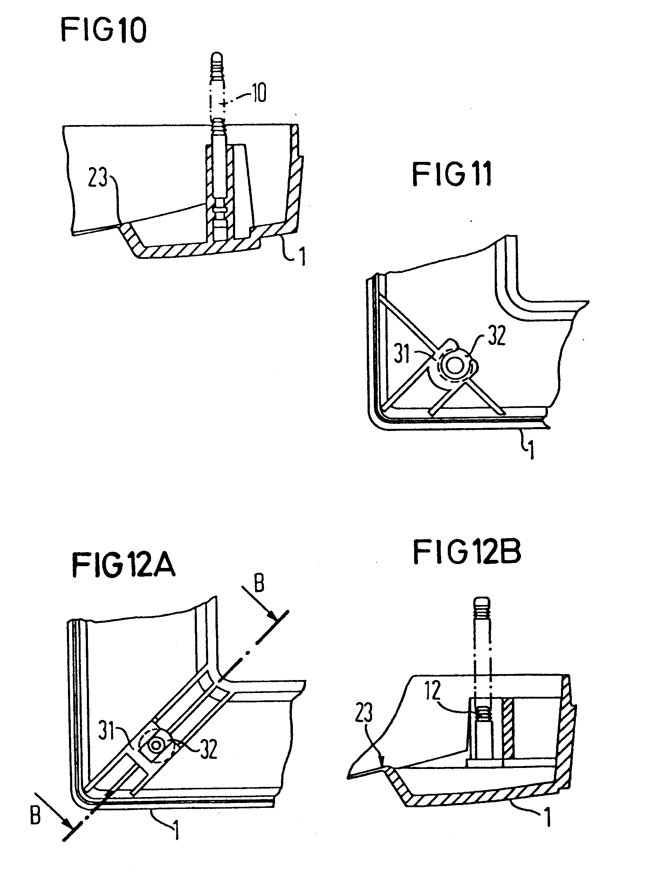

Der Trägerrahmen 3 kann innerhalb eines Gehäuses oder in Form eines Chassis ausgebildet sein. Die Befestigungsbuchsen 14 werden mit ihren Nuten 19 in Schlitze 30 am Trägerrahmen 3 eingeschoben und durch entsprechende Wahl der Schlitz- bzw. Nutbreite festgeklemmt. Diese Schlitze 30 sind diagonal zur Bildschirmmitte hin gerichtet und in dieser Richtung zum Einschieben der Befestigungsbuchsen 14 offen. Die Bolzen 10 sind in der Blende 1 verankert. Die Verankerung der Bolzen 10 kann fest (FIG 10) oder beweglich (FIG 11, FIG 12A und 12 B) sein.

Bei der festen Verankerung wird der Bolzen 10 zum Beispiel mit Ultraschall in einen mit der Blende 1 vorhandenen Halteschaft eingepreßt. Die bewegliche Verankerung kann aus einer Schnappeinrichtung (FIG 11) oder einer Schieneneinrichtung (FIG 12A und 12B) mit Jeweils einer Aufnahme 31 und Öffnung 32 für den Bolzen 10 bestehen. Bei der festen Verankerung weist der Bolzen kopfseitig zum Beispiel zwei den Bolzen umlaufende und parallel zueinander liegende Nuten und bei der beweglichen Verankerung kopfseitig einen Flansch auf, durch den er in axialer Richtung nicht aus den Verankerungen gezogen werden kann. Die schienenartige Anordnung ermöglicht dem Bolzen 10 die Verschiebung auf einer diagonal zur Bildschirmmitte hin gerichteten Geraden, während die schnappende Einrichtung durch eine kreisförmige Öffnung mit größerem Durchmesser als der Bolzenkerndurchmesser Dₐ aber kleinerem Durchmesser als der Flanschdurchmesser eine Bewegung nach allen Seiten hin ermöglicht.

Der Bolzen 10 kann durch seitliche, zur Bildschirmmitte hinzeigende Öffnungen 32 in die Verankerungen eingeführt werden. Dabei ist die Öffnung 32 der schnappenden Verankerung (FIG 11) etwas kleiner als der Bolzenkerndurchmesser Dₐ, wodurch der charakteristische Schnappeffekt erzielt wird.

Für die Wahl der Abstände der Sägezähne der sägezahnförmigen Profile von Bolzen 10 und Befestigungsbuchse 14 werden zweckmäßigerweise die die Klemmverbindung beeinflussenden Fertigungstoleranzen der Bildröhre 2, des Trägerrahmen 3 und der Blende 1 addiert und die Abstände dann kleiner gewählt als es die Toleranzensumme ergibt. Auf diese Weise rasten die Klemmverbindungselemente 10 und 14 innerhalb des maximalen Toleranzbereichs einmal mehr ein, wodurch der effektive Toleranzbereich kleiner wird.

## Patentansprüche

1. Verfahren zur Montage von Bildschirmgeräten, bei denen eine Bildröhre (2) mit an deren äußerem Umfang angeordneten Haltelaschen zwischen einem in sich geschlossenen Trägerrahmen (3) und einer rahmenförmigen Blende (1) mit einer der Wölbung der sphärischen Bildschirmoberfläche der Bildröhre (2) angepaßten und den Rahmenausschnitt der Blende (1) begrenzenden umlaufenden Innenkante als Halterung angeordnet ist, **dadurch gekennzeichnet,** daß für die Montage Halterungsteile (Blende 1 bzw. Trägerrahmen 3) mit seitlichen Zentrierflächen verwendet werden, in denen die Bildröhre (2) zentrisch führbar ist, daß nach Einlegen des die Zentrierflächen aufweisenden Halterungsteils (1 bzw. 3) in eine Formschale (4) die Bildröhre (2) in dieses Halterungsteil (1 bzw. 3) eingesetzt wird, daß anschließend das die Halterung der Bildröhre (2) vervollständigende Halterungsgegenteil (3) bzw. 1) über die Bildröhre (2) gelegt wird und beide Halterungsteile (1 und 3) mit einem vorgegebenen Druck gegeneinander gedrückt werden und daß die Halterungsteile (1 und 3) dann in der eingenommenen Endstellung durch verteilt angeordnete Befestigungsmittel (5) in ihrer eingenommenen Lage fixiert werden.

2. Verfahren nach Anspruch 1, **dadurch gekennzeichnet,** daß an den Halterungsteilen (1 und 3) mehrere jeweils aufeinander ausgerichtete Klemmelemente von verteilt angeordneten zweiteiligen Klemmverbindungen (5) angebracht werden, die während des Preßvorgangs zum Einrasten gebracht werden.

3. Verfahren nach Anspruch 2, **dadurch gekennzeichnet,** daß in einem ersten Verfahrensschritt in eine Formschale (4) einer Einpreßstation nacheinander die Blende (1), die Bildröhre (2) und der Trägerrahmen (3) mit zueinander ausgerichteten Klemmelementen an Blende (1) und Trägerrahmen (3) übereinandergeschichtet werden, daß anschließend durch in der Einpreßstation vorgesehene und seitlich über Halteflächen (7) des Trägerrahmens (3) schiebbare Anschlagbolzen (6) des Trägerrahmens (3) gegen ein vertikales Ausweichen nach oben gesichert wird und daß schließlich die Blende (1) samt Bildröhre (2) mittels der als Druckstempel (8) ausgebildeten Formschale (4) mit vorgegebenem Druck gegen den Trägerrahmen (3) gepreßt werden, bis die Klemmverbindungen (5) einrasten, bevor der Druckstempel (8) und die Anschlagbolzen (6) wieder in die Ausgangslage zurückkehren.

4. Klemmverbindung zur gegenseitigen Befestigung wenigstens zweier Teile für die Halterung einer Bildröhre, bestehend aus einem mit dem ersten Teil verbundenen Bolzen (10), auf dessen mit umlaufenden Rillen versehenes und ein sägezahnförmiges Profil aufweisendes freies Ende ein ein Kernloch (21) enthaltendes Klemmelement in axialer Richtung aufschiebbar ist, das
- aus einem gegenüber dem Bolzen (10) weicheren Material besteht,
- nach dem Aufschieben mit den Rillen des freien Endes des Bolzens (10) in einem ein Verschieben in Gegenrichtung hemmenden Eingriff steht und
- eine in Achsrichtung längere Ausdehnung aufweist, die einem Vielfachen des Bolzendurchmessers entspricht, wobei
- das Kernloch wenigstens in einem Teilbereich einen gegenüber dem Außendurchmesser (Dₐ) des Bolzens (10) verringerten Durchmesser und innerhalb des Teilbereichs mit dem verringerten Durchmesser ein sägezahnförmiges Profil aufweist, das dem sägezahnförmigen Profil des eingeschobenen Bolzens (10) entspricht,
**dadurch gekennzeichnet,**
daß das freie Ende des Bolzens eine Reihe ringförmig umlaufender Rillen (11) aufweist, die durch parallel zueinander liegende Scheiben (12) mit konischen Außenflächen gebildet sind und zusammen das sägezahnförmige Profil ergeben, und
daß das Klemmelement als zylindrische Befestigungsbuchse (14) ausgebildet und in zwei symmetrische Längshälften (15) unterteilt ist, die durch wenigstens eine aufschiebbare Federklammer (17) zusammengehalten sind.

5. Klemmverbindung nach Anspruch 4, **dadurch gekennzeichnet,** daß die Befestigungsbuchse (14) an einem Ende einen Stirnflansch (18) aufweist, daß die Befestigungsbuchse (14) an ihrem dem Stirnflansch (18) zugewandten Ende eine symmetrisch zur Ausdehnungsachse angeordnete Nut (19) auf der Außenfläche aufweist und daß das die Befestigungsbuchse (14) aufnehmende zweite Teil wenigstens zwei sich senkrecht zur Bolzenachsrichtung erstreckende Schlitze (30) mit einer der Nut (19) der Befestigungsbuchse (14) angepaßten Schlitzbreite aufweist, in die die Befestigungsbuchsen (14) einschiebbar sind, bevor die Bolzen einzeln in die Befestigungsbuchsen (14) eingedrückt werden.

6. Klemmverbindung nach Anspruch 4 oder 5, **dadurch gekennzeichnet,** daß die beiden Hälften (15) der Befestigungsbuchse (14) durch ein wie ein Scharnier wirkendes Verbindungsband (16) elastisch verbunden sind und alle drei Bestandteile ein einheitliches Bauteil aus demselben Werkstoff bilden.

7. Klemmverbindung nach einem der Ansprüche 4 bis 6, **dadurch gekennzeichnet,** daß die im zusammengeklappten Zustand der Buchsenhälften (15) das Kernloch (21) bildenden Ausnehmungen (22) von kreissegmentförmigem Profil sind, so daß das gebildete Kernloch (21) einen annähernd elliptischen Querschnitt aufweist, wobei der Radius der Ausnehmungen mindestens dem Radius des Bolzens im Rillenbereich entspricht.

8. Halterung für eine Bildröhre (2) mit an derem äußeren Umfang angeordneten Befestigungslaschen (25), bestehend aus einem in sich geschlossenen Trägerrahmen (3) und einer rahmenförmigen Blende (1) mit einer der Wölbung der sphärischen Bildschirmoberfläche (24) der Bildröhre (2) angepaßten und den Rahmenausschnitt der Blende (1) begrenzenden umlaufenden Innenkante (23), wobei die Bildröhre (2) zwischen Trägerrahmen (3) und Blende (1) angeordnet ist unter Verwendung von Klemmverbindungen nach einem der Ansprüche 4 bis 9, **dadurch gekennzeichnet,** daß Trägerrahman (3) und Blende (1) die durch die Klemmverbindungen miteinander zu befestigenden Teile bilden und daß die Bildröhre (2) von seitlichen Zentrierflächen (26) zentrisch geführt durch Druck der Innenkante (23) der Blende (1) auf die Bildschirmoberfläche (24) mit den Befestigungslaschen (25) am Trägerrahmen (3) aufliegend durch die Klemmverbindungen (5) so gehalten wird, daß die Blende (1) nicht am Trägerrahmen (3) anliegt.

9. Halterung nach Anspruch 8, **dadurch gekennzeichnet,** daß die Innenkante (23) der Blende (1) mit einem Radius gewölbt ist, der größer ist als der Radius der Wölbung der Bildschirmoberfläche (24) der Bildröhre (2).

10. Halterung nach Anspruch 8 oder 9, **dadurch gekennzeichnet,** daß die Zentrierflächen (26) aus entlang dem Umfang der Bildröhre (2) angeordneten Rippen (27) mit zur Bildschirmoberfläche (24) senkrechter Ausrichtung bestehen, die innerhalb der Blende (1) angeordnet sind.

11. Halterung nach einem der Ansprüche 8 bis 10, **dadurch gekennzeichnet,** daß die Klemmverbindungen (5) in den Eckbereichen (28) der Blende (1) angeordnet sind und daß die Bolzen (10) der Klemmverbindungen (5) durch Öffnungen (29) der Befestigungslaschen (25) der Bildröhre (2) hindurchgreifen.

12. Halterung nach einem der Ansprüche 8 bis 11, **dadurch gekennzeichnet,** daß wenigstens ein Teilelement jeder Klemmverbindung gegenüber dem jeweils zugehörigen anderen Teilelement in einer Aufnahme (31) quer zur Klemmrichtung beweglich verankert ist und daß wenigstens die Aufnahmen (31) für die beweglich verankerten Bolzen eine seitliche Öffnung (32) zum Einschieben des jeweiligen Teilelementes aufweisen.

## Claims

1. Method for mounting visual display units in which a picture tube (2) having retaining clips arranged on the outer circumference thereof is arranged between an inherently closed carrying frame (3) and a frame-shaped bezel (1) having as a mount a circumferential inside edge which is matched to the curvature of the spherical display screen surface of the picture tube (2) and delimits the frame cutout of the bezel (1), characterised in that mounting parts (bezel 1 and carrying frame 3) having lateral centring surfaces in which the picture tube (2) can be guided centrally are used for mounting, in that after insertion of the mounting part (1 or 3) having the centring surfaces into a moulding dish (4) the picture tube (2) is inserted into this mounting part (1 or 3), in that subsequently the mating mounting part (3 or 1) which completes the mount of the picture tube (2) is located over the picture tube (2) and both mounting parts (1 and 3) are pressed against one another with a prescribed pressure, and in that the mounting parts (1 and 3) are then fixed in the final position adopted in the position they have adopted by fastening means (5) which are arranged in a distributed fashion.

2. Method according to Claim 1, characterised in that attached to the mounting parts (1 and 3) are a plurality of clamp elements, aligned on one another in each case, of two-part clamp connections (5) which are arranged in a distributed fashion and are made to lock home during the pressing process.

3. Method according to Claim 2, characterised in that in a first method step the bezel (1), the picture tube (2) and the carrying frame (3) having clamp elements aligned towards one another on the bezel (1) and carrying frame (3) are successively stacked one on top of another in a moulding dish (4) of a press-in station, in that subsequently the carrying frame (3) is secured against vertical movement upwards by stop pins (6) which are provided in the press-in station and can be pushed laterally over retaining surfaces (7) of the carrying frame (3), and in that, finally, the bezel (1) is pressed together with the picture tube (2) against the carrying frame (3) with a prescribed pressure by means of the moulding dish (4), which is constructed as a ram (8), until the clamp connections (5) lock home before the ram (8) and the stop pins (6) return once again to the initial position.

4. Clamp connection for mutually fastening at least two parts for mounting a picture tube, comprising a pin (10) which is connected to the first part and onto whose free end, which is provided with circumferential grooves and has a sawtooth profile, it is possible to slip on in the axial direction a clamp element which contains a core hole (21) and
- comprises a material which is softer than the pin (10),
- after being slipped on engages with the grooves of the free end of the pin (10) in a manner inhibiting displacement in the opposite direction, and
- has an extent which is longer in the axial direction and corresponds to a multiple of the pin diameter, it being the case that
- at least in a subregion the core hole has a diameter which is reduced in relation to the outside diameter (Dₐ) of the pin (10), and inside the subregion with the reduced diameter has a sawtooth profile which corresponds to the sawtooth profile of the pushed-in pin (10),
characterised in that the free end of the pin has a series of annularly extending grooves (11) which are formed by discs (12), which are situated parallel to one another and have conical outer surfaces, and together produce the sawtooth profile, and in that the clamp element is constructed as a cylindrical fastening bush (14) and is subdivided into two symmetrical longitudinal halves (15) which are held together by at least one slipon spring clamp (17).

5. Clamp connection according to Claim 4, characterised in that the fastening bush (14) has an end flange (18) at one end, in that the fastening bush (14) has at its end facing the end flange (18) a groove (19), arranged symmetrically relative to the axis of extent, on the outer surface, and in that the second part, which accommodates the fastening bush (14), has at least two slots (30) which extend perpendicular to the direction of the pin axis and have a slot width matched to the groove (19) of the fastening bush (14), into which slots the fastening bushes (14) can be pushed before the pins are individually pressed into the fastening bushes (14).

6. Clamp connection according to Claim 4 or 5, characterised in that the two halves (15) of the fastening bush (14) are connected elastically by a connecting band (16) acting like a hinge, and all three components form a unified assembly made from the same material.

7. Clamp connection according to one of Claims 4 to 6, characterised in that the recesses (22) which form the core hole (21) in the folded state of the bush halves (15) have a profile in the shape of a circular segment, so that the core hole (21) that is formed has an approximately elliptical cross-section, the radius of the recesses corresponding at least to the radius of the pin in the groove region.

8. Mount for a picture tube (2) having fastening clips (25) arranged on the outer circumference thereof, comprising an inherently closed carrying frame (3) and a frame-shaped bezel (1) having a circumferential inside edge (23) which is matched to the curvature of the spherical display screen surface (24) of the picture tube (2) and delimits the frame cutout of the bezel (1), the picture tube (2) being arranged between the carrying frame (3) and bezel (1) with the use of clamp connections according to one of Claims 4 to 7, characterised in that the carrying frame (3) and bezel (1) form the parts that are to be fastened to one another by the clamp connections, and in that in a manner centrally guided by lateral centring surfaces (26) the picture tube (2) is held by the pressure of the inside edge (23) of the bezel (1) on the display screen surface (24) by means of the clamp connections (5), with the fastening clips (25) resting on the carrying frame (3), in such a way that the bezel (1) does not bear against the carrying frame (3).

9. Mount according to Claim 8, characterised in that the inside edge (23) of the bezel (1) is curved with a radius which is larger than the radius of the curvature of the display screen surface (24) of the picture tube (2).

10. Mount according to Claim 8 or 9, characterised in that the centring surfaces (26) comprise ribs (27) which are arranged along the circumference of the picture tube (2) and are aligned perpendicular to the display screen surface (24) and are arranged inside the bezel (1).

11. Mount according to one of Claims 8 to 10, characterised in that the clamp connections (5) are arranged in the corner regions (28) of the bezel (1), and in that the pins (10) of the clamp connections (5) engage through openings (29) of the fastening clips (25) of the picture tube (2).

12. Mount according to one of Claims 8 to 11, characterised in that at least one subelement of each clamp connection is movably anchored relative to the respectively associated other subelement in a receptacle (31) in a manner transverse to the clamping direction, and in that at least the receptacles (31) for the movably anchored pins have a lateral opening (32) for pushing in the respective subelement.

## Revendications

1. Procédé pour le montage d'appareils à écran de visualisation, dans lesquels un tube image (2), sur la périphérie extérieure duquel sont agencées des pattes de retenue, est disposé entre un cadre de support fermé sur luimême (3) et un panneau en forme de cadre (1) comportant un bord intérieur circonférentiel formant support, adapté à la courbure de la surface sphérique de l'écran du tube image (2) et limitant la partie du cadre du panneau (1), caractérisé par le fait que pour le montage, on utilise des éléments de fixation (panneau 1 ou cadre de support 3) possédant des surfaces latérales de centrage, dans lesquelles le tube image (2) peut être guidé de façon centrée, qu'après la mise en place de la partie de fixation (1 ou 3), qui possède les surfaces de centrage, dans une coque profilée (4), on introduit le tube image (2) dans cette partie de fixation (1 ou 3), qu'ensuite on place l'élément antagoniste de fixation (3 ou 1), qui complète la fixation du tube image (2), audessus de ce dernier et qu'on serre l'une contre l'autre les deux parties de fixation (1 et 3) avec une pression prédéterminée, et qu'on fixe ensuite les parties de fixation (1 et 3), dans la position finale qu'elles ont prise, à l'aide de moyens de fixation répartis (5).

2. Procédé suivant la revendication 1, caractérisé par le fait que sur les parties de fixation (1 et 3) sont montés plusieurs éléments de serrage, qui sont alignés respectivement les uns sur les autres, de systèmes de liaison à serrage répartis (5) formés de deux éléments, qui sont amenés à s'encliqueter pendant l'opération de serrage.

3. Procédé suivant la revendication 2, caractérisé par le fait que lors d'une première étape opératoire, dans un poste de serrage on superpose successivement, à l'intérieur d'une coque moulée (4), le panneau (1), le tube image (2) et le cadre de support (3), avec alignement mutuel des éléments de serrage situés sur le panneau (1) et le cadre de support (3), qu'ensuite on réalise un blocage contre tout déplacement vertical ascendant au moyen de boulons de butée (6) du cadre de support (3), qui sont prévus dans le poste de serrage et peuvent être repoussés latéralement par-dessus les surfaces de retenue (7) du cadre de support (3), et qu'enfin on repousse le panneau (1) y compris le tube image (2), avec une pression prédéterminée contre le cadre de support (3), au moyen de la coque moulée (4) réalisée sous la forme d'un poinçon de serrage (8), jusqu'à ce que les systèmes de liaison à serrage (5) s'encliquettent, avant que le poinçon de serrage (8) et le boulon de butée (6) reviennent dans leur position initiale.

4. Système de liaison à serrage pour la fixation réciproque d'au moins deux parties pour la fixation d'un tube image, constitué par un boulon (10), qui est raccordé à la première partie, et dans lequel sur l'extrémité libre de ce boulon, qui comporte des rainures circonférentielles et possède un profil en dents de scie, peut être emmanché, dans la direction axiale, un élément de serrage qui comporte un avant-trou (21) et qui
- est réalisé en un matériau plus mou que celui du boulon (10),
- engrène, après son emmanchement, avec les rainures de l'extrémité libre du boulon (10) selon un engrènement bloquant tout déplacement en sens opposé, et
- possède une étendue plus longue dans la direction axiale et qui correspond à un multiple du diamètre du boulon,
- l'avant-trou comportant, au moins dans une zone partielle, un diamètre réduit par rapport au diamètre extérieur (Dₐ) du boulon (10), et à l'intérieur de la zone partielle de diamètre réduit, un profil en dents de scie qui correspond au profil en dents de scie du boulon inséré (10),
caractérisé par le fait
que l'extrémité libre du boulon possède une série de rainures circonférentielles annulaires (11), qui sont formées par des rondelles (12) parallèles entre elles et possédant des surfaces coniques et forment ensemble le profil en dents de scie, et
que l'élément de serrage est agencé sous la forme d'une douille cylindrique de fixation (14) et est subdivisé en deux moitiés longitudinales symétriques (15), qui sont maintenues assemblées par au moins une pince élastique emmanchable (17).

5. Système de liaison à serrage suivant la revendication 4, caractérisé par le fait que la douille de fixation (14) possède, à une extrémité, une bride frontale (18), que la douille de fixation (14) possède, sur son extrémité tournée vers la bride frontale (18), une rainure (19) symétrique par rapport à l'axe d'extension, sur la surface extérieure et que la seconde partie, qui loge la douille de fixation (14), possède au moins deux fentes (30) qui s'étendent perpendiculairement à la direction axiale du boulon et possèdent une largeur adaptée à la rainure (19) de la douille de fixation (14) et dans laquelle les douilles de fixation (14) peuvent être insérées avant le serrage individuel des boulons dans les douilles de fixation (14).

6. Système de liaison à serrage suivant la revendication 4 ou 5, caractérisé par le fait que les deux moitiés (15) de la douille de fixation (14) sont reliées élastiquement par une bande de liaison (16) agissant en tant que charnière et que les trois éléments constitutifs forment un composant unitaire formé du même matériau.

7. Système de liaison à serrage suivant l'une des revendications 4 à 6, caractérisé par le fait que les évidements (22), qui, lorsque Tes moitiés (15) de la douille sont à l'état replié, forment l'avant-trou (21), possèdent un profil en forme de segment circulaire, en sorte que l'avanttrou formé (21) possède une section transversale approximativement elliptique, le rayon des évidements correspondant au moins au rayon du boulon dans la zone de la rainure.

8. Dispositif de fixation pour un tube imge (2) comportant des pattes de fixation (25) fixées sur sa périphérie extérieure, constitué par un cadre de support (3) fermé sur lui-même et un panneau en forme de cadre (1) comportant un bord intérieur circonférentiel, qui est adapté au cintrage de la surface sphérique (24) de l'écran du tube image (2) et limite la partie formant cadre du panneau (1), le tube image (2) étant disposé entre le cadre de support (3) et le panneau (1) moyennant l'utilisation de systèmes de liaison à serrage suivant l'une des revendications 4 à 9, caractérisé par le fait que le cadre de support (3) et le panneau (1) forment les parties devant être fixées l'une à l'autre par les systèmes de liaison à serrage et que le tube image (2), qui est guidé de façon centrée par ses surfaces latérales de centrage (26), est maintenu appliqué par les pattes de fixation (25) contre le cadre de support (3), sous l'effet de la pression du bord intérieur (23) du panneau (1) sur la surface (24) de l'écran, au moyen des systèmes de liaison à serrage (5), en sorte que le panneau (1) ne s'applique pas contre le cadre de support (3).

9. Dispositif de fixation suivant la revendication 8, caractérisé par le fait que le bord intérieur (23) du panneau (1) est cintré avec un rayon qui est supérieur au rayon du cintrage de la surface (24) de l'écran du tube image (2).

10. Dispositif de fixation suivant la revendication 8 ou 9, caractérisé par le fait que les surfaces de centrage (26) sont constituées par des nervures (27), qui sont disposées le long de la circonférence du tube image (2) et sont orientées perpendiculairement à la surface (24) de l'écran et qui sont disposées à l'intérieur du panneau (1).

11. Dispositif de fixation suivant l'une des revendications 8 à 10, caractérisé par le fait que les systèmes de liaison à serrage (5) sont disposés dans les zones d'angle (28) du panneau (1) et que les boulons (10) des systèmes de liaison à serrage (5) traversent des ouvertures (29) des pattes de fixation (25) du tube image (2).

12. Dispositif de fixation suivant l'une des revendications 8 à 11, caractérisé par le fait qu'au moins un élément partiel de chaque système de liaison à serrage est ancré par rapport à l'autre élément partiel respectivement associé, dans un logement (31) de manière à être déplaçable transversalement par rapport à la direction de serrage, et qu'au moins les logements (31) pour les boutons, ancrés de manière à être déplaçables, possèdent une ouverture latérale (32) pour l'insertion de l'élément partiel respectif.
